# EUROPEAN PATENT SPECIFICATION

(11) **EP 0 459 832 B1**
(45) Date of publication and mention of the grant of the patent: **04.09.1996**
(21) Application number: 91304969.8
(22) Date of filing: 31.05.1991
(51) Int. Cl.: G02F 1/1335, G02F 1/1339, H01L 31/02

(54) **Liquid crystal colour display device and method for producing the same**
Flüssigkristall-Farbanzeige und Verfahren zu seiner Herstellung
Dispositif d'affichage en couleur à cristaux liquides et son prodédé de fabrication

(30) Priority: 31.05.1990 JP 139617/90; 10.07.1990 JP 181977/90
(43) Date of publication of application: 04.12.1991
(73) Proprietor: CANON KABUSHIKI KAISHA, Tokyo (JP)
(72) Inventor: Shindo, Hitoshi, Canon Kabushiki Kaisha, Ohta-ku, Tokyo (JP); Nakayama, Jun, Canon Kabushiki Kaisha, Ohta-ku, Tokyo (JP)
(74) Representative: Beresford, Keith Denis Lewis

(56) References cited:
- EP-A- 0 179 922
- EP-A- 0 425 090
- PATENT ABSTRACTS OF JAPAN vol. 13, no. 350 (P-972)8 December 1989 & JP A 1229205
- PATENT ABSTRACTS OF JAPAN vol. 13, no. 59 (P-826)10 February 1989 & JP A 63249107
- PATENT ABSTRACTS OF JAPAN vol. 11, no. 293 (P-619)22 September 1987 & JP A 62087936
- PATENT ABSTRACTS OF JAPAN vol. 10, no. 154 (P-463)(2210) 4 June 1986 & JP A 61007823
- PATENT ABSTRACTS OF JAPAN vol. 11, no. 283 (P-615)12 September 1987 & JP A 62079424
- APPLIED PHYSICS LETTERS. vol. 56, no. 16, 16 April 1990, NEW YORK US pages 1543 - 1545 K.MASU 'SELECTIVE DEPOSITION OF ALUMINUM FROM ....'

## Description

The present invention relates to a liquid crystal colour display device and to a method for producing the same, particularly a liquid crystal colour display device of a type, such as disclosed in EP-A-179922, which comprises
a first and a second substrate arranged substantially parallel and mutually opposed;
a liquid crystal material sandwiched between said first and second substrates;
a plurality of transparent display electrodes and corresponding thin film switching devices disposed on the inward facing surface of said first substrate whereby each thin film switching device is connected to its corresponding display electrode;
a first transparent counter electrode; and
a composite layer of colour filters and light shield members, wherein said light shield member being composed of aluminium or a metal substantially composed of aluminium and being disposed in areas of said composite layer where said colour filters are absent.

In the display of EP-A-179922, the composite layer is disposed directly on the principal surface of the substrate and the first counter electrode, the only counter electrode, is disposed on the surface of the composite layer.

In an alternative construction of display device described in JP-A-63-249107 and in related Patent Abstracts of Japan Vol.13, No. 59 (P-826) [3407], the first counter electrode, the only counter electrode, is disposed directly on the principal surface of the substrate, and the composite layer is disposed on the surface of the counter electrode. This has a disadvantage in that the interposed composite layer increases the capacitance between the counter electrode and the display electrodes.

The aforesaid type of display device is one of active matrix drive structure in which switching elements are provided by each thin film device such as a thin film transistor (TFT) or a thin film diode.

For achieving colour display with such panel structure, it is necessary to form transmissive colour filters e.g. of red, green and blue, on one of the paired substrates. It is also desirable to form opaque members, in the areas between the colour filters formed corresponding to the display pixels, in order to intercept any stray light.

A conventional example of the structure of a composite filter layer will be explained with reference to Fig. 1. Further details are given in JP-A-63-249107. A transparent substrate 11, constituting one of the above-mentioned paired substrates 17,11 bears thereon a first transparent electrode layer 12, on which is formed a composite filter layer including a cyclic repetition of blue coloured filters 13a, green coloured filters 13b and red coloured filters 13c. In such structure, opaque members are disposed as a patterned metal layer 14, composed for example of Cr, NiCr, or Ta, positioned in between the coloured filter elements 13a, 13b, 13c.

The opaque members may also be formed by mutually superposing the colours of red, green and blue in the pattern and position of the opaque members, or by forming a patterned black-dyed layer in case of a colour filter obtained by dyeing a polymer film for example of polyvinyl alcohol with dyes.

Such methods for forming the composite layer involve alignment between the coloured filters and the opaque (metal) members, and inevitably result in formation of superposed portions therebetween, thus leading firstly to a loss in the aperture ratio of the pixels, or worse, secondly to defects in the orientation of liquid crystal molecules resulting from stepped portions. These problems also are addressed herein and are solved by the disclosed method and its preferred embodiment, respectively.

Where spacers are used in the liquid crystal colour display device, the uniform planarity of the device is determined by the positioning of such spacers.

In the following there will be outlined some technical problems that can occur in the conventional liquid crystal display device, in relation to spacers which are used for maintaining a predetermined distance between the paired substrates.

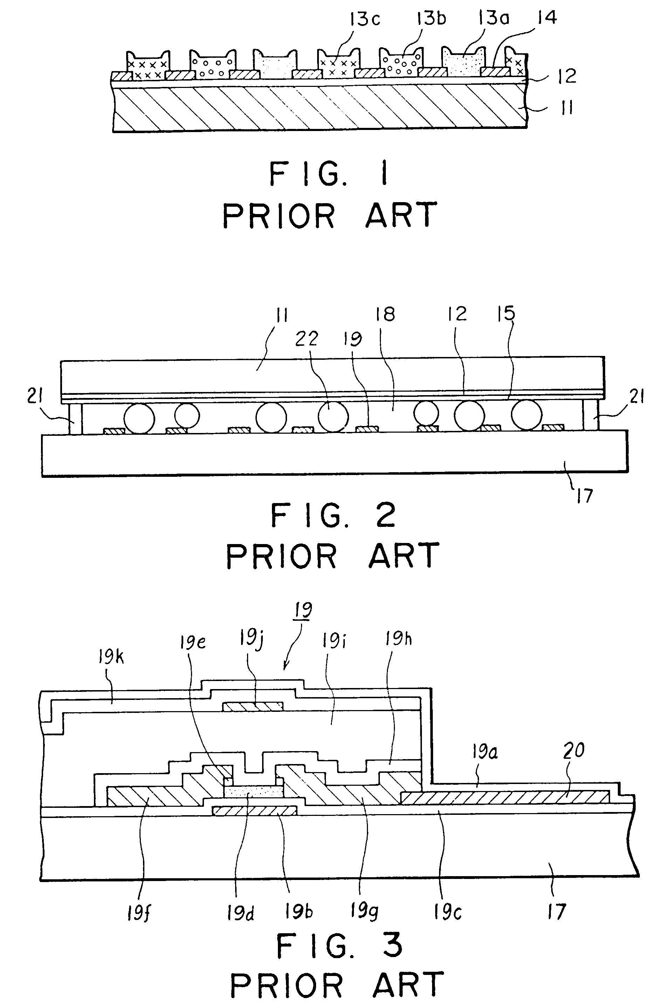

The preparation of a liquid crystal display panel follows steps, as shown in Fig. 2, of formation of thin film devices 19 on a first glass substrate 17, printing of seal portions 21, scattering of spherical spacers 22 on the first glass substrate 17, adhesion of a second glass substrate 11, bearing a transparent counter-electrode 12 and a liquid crystal orienting film 15 thereon, with the first glass substrate 17, and filling of liquid crystal material 18 between the glass substrates 17,11.

The above-mentioned thin film device 19 is more specifically a thin film transistor as shown in Fig. 3, in which are shown a liquid crystal orienting film 19a, a gate electrode 19b, a gate insulation film 19c, a semiconductor layer 19d, a low-resistance semiconductor layer 19e, a drain electrode 19f, a source electrode 19g, a display pixel electrode 20, a silicon nitride film (inorganic protective film) 19h, a polyimide (organic protective film) 19i, an opaque member 19j, and an organic protective film 19k. After the formation of the thin film transistors of the above-explained structure, namely the thin film devices 19, on the first glass substrate 17, the liquid crystal display panel is obtained by the steps, as explained above, of printing of the seal portions 21, scattering of the spherical spacers 22 on the first glass substrate 17, adhesion of the second glass substrate 11, bearing the transparent counter-electrode 12 and the liquid crystal orienting film 15 thereon, to the first glass substrate 17, and the filling of liquid crystal 18 between the substrates 17,11.

In the above-explained conventional structure, however, the spacers 22 are positioned randomly, without any position control. Thus, a spacer 22, if accidentally positioned on a thin film device 19 and applied by the pressure of liquid crystal filling, may destroy the protective film 19k of said device 19, thereby inducing defective function of the device and deteriorating the production yield of liquid crystal display panels.

This last mentioned problem is solved by an alternative TFT substrate, to be described below. This provides an alternative to the use of photolithographically defined spacers of photoresist such as disclosed in JP-A-61-7823 and Patent Abstracts of Japan, Vol. 10, No. 154 [P-463] (2210).

The display device of the present invention provides a means of reducing interelectrode capacitance. Such liquid crystal colour display device, of the type above specified, is, in accordance with the present invention, characterised in that:
said first transparent counter electrode is disposed on the inward facing surface of said second substrate and said composite layer is disposed on said first transparent counter electrode, and in that
a second transparent counter electrode is disposed on said composite layer.

In the preferred embodiment of the aforesaid liquid crystal colour display device the light shield members and the colour filters are of substantially the same layer thickness. Accordingly, there are no substantially stepped portions of the structure that would cause defects in the orientation of liquid crystal molecules.

In yet a further preferred embodiment of the aforesaid liquid crystal colour display device, a patterned insulation film is provided with openings over the display electrodes and over wiring conductors of the thin film devices, also spacers of aluminium or a metal composed principally of aluminium is disposed on the wiring conductors exposed by said openings in the patterned insulation film.

In accordance with a further aspect of the present invention there is provided a method for producing said liquid crystal colour display device, and which includes:
providing a first substrate having on a principal surface thereof a plurality of transparent display electrodes and corresponding thin film devices connected thereto;
preparing a second substrate having on a principal surface thereof both a first transparent counter electrode and a composite layer of colour filters and light shield members composed of aluminium or a metal substantially composed of aluminium;
arranging said first and second substrates in parallel with said respective principal surfaces mutually opposed and facing inwards; and
introducing liquid crystal material into the space between said first and second substrates so that it is sandwiched therebetween;
which method is characterised in that said second substrate is prepared by:
depositing a transparent film of conductive material on the principal surface of said second substrate to form said first transparent counter electrode;
forming said colour filters of said composite layer by repeating steps of patterning resist, depositing respective filter material, and removing resist;
forming said light shield member of said composite layer by depositing aluminium, or a metal principally composed of aluminium, selectively upon areas of said first transparent counter electrode left exposed after said forming of said colour filters, by chemical vapour deposition from a first gaseous mixture comprising an alkylaluminium hydride gas and hydrogen gas; and
depositing a transparent film of conductive material on the surface of said composite layer to form a second transparent counter electrode.

In this method the alkylaluminium hydride is preferably dimethylaluminium hydride.

The selective deposition, defined in the above method, enables highly precise positioning because aluminium or the metal composed principally of aluminium, is produced with a very low hillock frequency, a high strain and a low tendency of undesirable influence by eutectic reaction (for example with silicon) and shows little time-dependent physical changes.

Also the CVD process utilising alkylaluminium hydride and hydrogen allows selectively deposition on the exposed surface of the counter electrode even if this exposed surface has very small widths, thereby easily realising a satisfactorily reproducible self-alignment process.

In a preferred embodiment of the aforesaid method, the selective deposition technique thereof may also be performed to produce spacers of aluminium, or metal composed principally of aluminium, on the wiring conductor parts of the thin film devices. Spacers with satisfactory position control, of satisfactory planarity and durability on the wiring conductors of the thin film devices, can be produced. These spacers can bear satisfactorily the pressure applied for example at the filling of liquid crystal material, thereby preventing defective function of the thin film devices that otherwise would result from defects in the spacers, thus improving the production yield of the liquid crystal display devices.

In the accompanying drawings:
Fig. 1 is a cross-sectional view of a substrate with colour filters, formed by a prior technology;
Fig. 2 is a cross-sectional view of a conventional liquid crystal panel;
Fig. 3 is a cross-sectional view of a conventional thin film transistor;
Figs. 4 to 10 are cross-sectional views showing successive stages in a method for producing a liquid crystal colour display device embodying the present invention;
Fig. 11 is a schematic view of an aluminium CVD apparatus that can be employed in producing display devices, embodying the present invention;
Figs. 12 to 14 are cross-sectional views showing successive stages of a method of producing the structured first substrate of a liquid crystal colour display which also embodies the present invention;
Fig. 15 is a view showing the functional stages of a metal film depositing apparatus;
Fig. 16 is a schematic plan view of the actual arrangement of the above metal film depositing apparatus; and
Fig. 17 is a schematic plan view of said metal film depositing apparatus in which the sequence of movements of the first glass substrate is represented by arrows.

To facilitate further understanding of the present invention, a preferred embodiment thereof will be described below in particular detail making reference to the aforesaid drawings. The description that follows is given by way of example only.

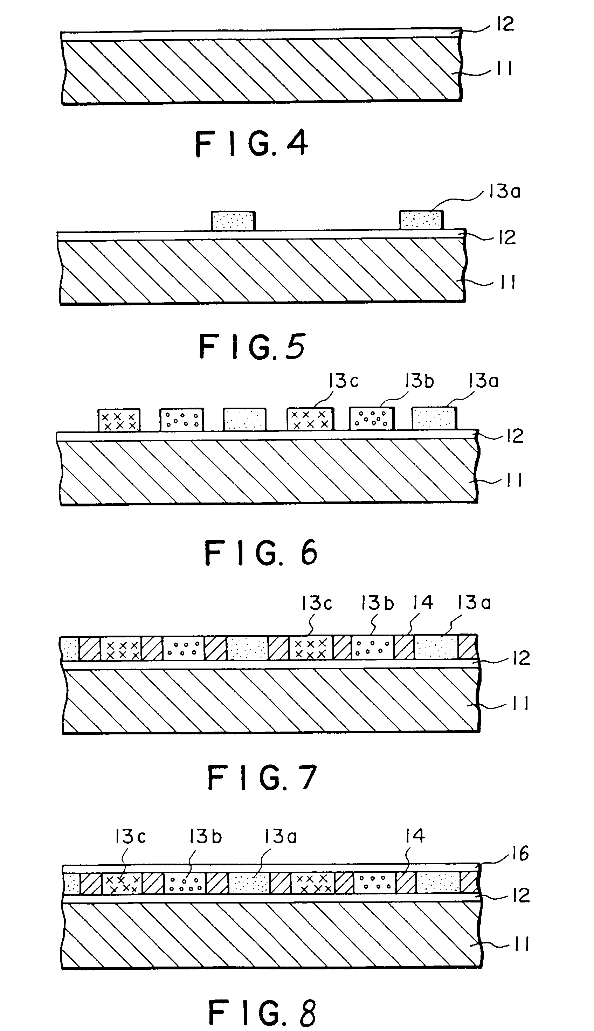

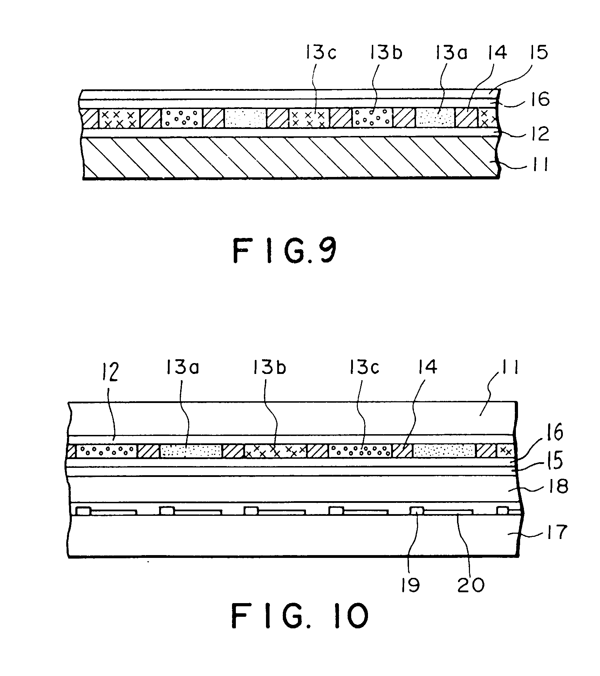

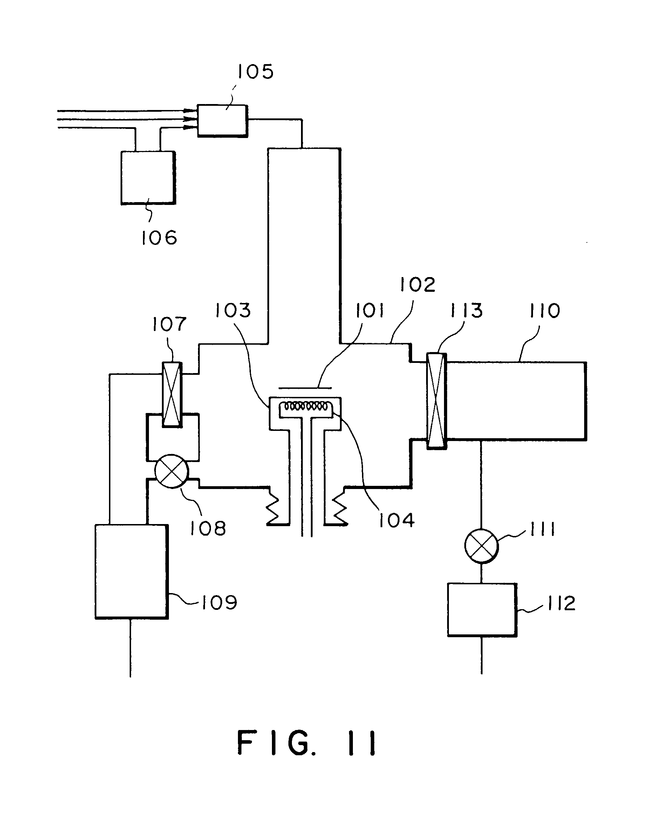

The present embodiment employs a composite colour filter layer formed by dispersing colouring materials in a transparent resin and photolithographically patterning said resin, a thin film transistor utilising polycrystalline silicon deposited by low pressure CVD, and a ferroelectric liquid crystal material. The structure includes a second transparent electrode layer on a colour filter layer 13a, 13b, 13c, 14 in order to reduce the capacitance between the thin film transistors for liquid crystal driving and the transparent electrodes of the opposite substrate. Fig. 10 is a cross-sectional view of the substrate with colour filters.
(i) At first, on a glass substrate 11 shown in Fig. 4, there was deposited by sputtering a transparent electrode layer 12 of a thickness of 200 Å, consisting of indium tin oxide (ITO).
(ii) Then, as shown in Fig. 5, there was spin coated N-methyl-2-pyrrolidone solution of aromatic polyamide resin PA-100C (a trade name of Ube Kosan Co.) in which a blue colouring material Heliogen Blue L7080 (a trade name of BAFG GmbH, C.I. No. 74160) was dispersed, so as to obtain a film thickness of 1.5 µm. The obtained film was then subjected exposure to the light of a high pressure mercury lamp, image development, rinsing, and baking for 30 minutes at 150°C to obtain blue coloured filters 13a of predetermined pattern and at predetermined positions.
(iii) Subsequently, as shown in Fig. 6, green coloured filters 13b were formed of predetermined pattern and at predetermined positions by a process similar to that in (ii), employing N-methyl-2-pyrrolidone solution of said aromatic polyamide resin, in which a green colouring material Lionol Green 6YK (a trade name of Toyo Ink Co., Ltd.; C.I. No. 74265) was dispersed.
(iv) Then, on the substrate already bearing blue and green patterns, red coloured filters 13c were formed in predetermined pattern and positions by a process similar to that in (ii), employing N-methyl-2-pyrrolidone solution of said aromatic polyamide resin, in which a red colouring material Irgazin Red BPT (a trade name of Ciba-Geigy Inc.; C.I. No. 71127) was dispersed. Thus obtained was a patterned composite colour filter layer consisting of striped patterns of red, green and blue.
(v) Subsequently the above-mentioned substrate (shown in Fig. 6) was placed in a preliminary evacuation chamber 110 of a CVD apparatus shown in Fig. 11, and the atmosphere therein was replaced by hydrogen. Then a gate valve 113 was opened, the substrate was transferred into a reaction chamber 102, and the interior thereof was evacuated to about 1 x 10⁻⁸ Torr by a vacuum system 109.

Then dimethylaluminium hydride (DMAH) was introduced by a DMAH gasline, through a gasifier 106, utilising hydrogen as the carrier gas.

Hydrogen was introduced as the reaction gas through a second gas line and was mixed with DMAH in a mixer 105, and the interior of the reaction chamber 102 was maintained at a predetermined pressure by regulating the aperture of a slow leak valve 108. A typical total pressure was about 1.5 Torr, with a DMAH partial pressure of about 5.0 x 10⁻³ Torr. Then a heat-generating resistor 104 of a substrate holder 103 was energised to heat the glass substrate 101 at 200°C. In this manner light shielding aluminium members 14 were deposited with a thickness of 1.5 µm, the same as that of the coloured filters. In this operation, aluminium was deposited selectively in areas where the ITO surface was exposed, namely where the coloured filters were absent.
(vi) Then, as shown in figure 8, on said substrate, an ITO layer of a thickness of 1000 Å was deposited by sputtering, as a second transparent electrode layer 16.
(vii) Then, as shown in Fig. 9, polyimide resin was coated to a thickness of 1200 Å over the entire surface of the aforementioned substrate, and was cured by heating for 1 hour at 250°C to obtain an orienting layer 15 consisting of polyimide resin. Subsequently a rubbing process was applied to the surface of said resin layer to provide an orienting function for the liquid crystal material, and the substrate with colour filters was thus completed.
(viii) Separately prepared TFT substrate 17, bearing thin film transistors 19 utilising poly-silicon deposited by low pressure CVD, was positioned opposite to and adhered to the above-mentioned substrate with colour filters, and ferroelectric liquid crystal was filled in the gap between said substrates and sealed therein to obtain the liquid crystal colour display device of the present embodiment.

The display device of the present embodiment, in comparison with a similar device, but in which the second contact electrode was missing, showed a decreased capacitance because of the absence of the coloured layers between the thin film transistors and the ITO layer constituting the counter-electrode. Also it shows satisfactory function without defects in the orientation of the ferroelectric liquid crystal molecules resulting from the steps in the coloured filters, as the substrate with colour filters had a flat surface. Also the aperture ratio per pixel was 80% or higher.

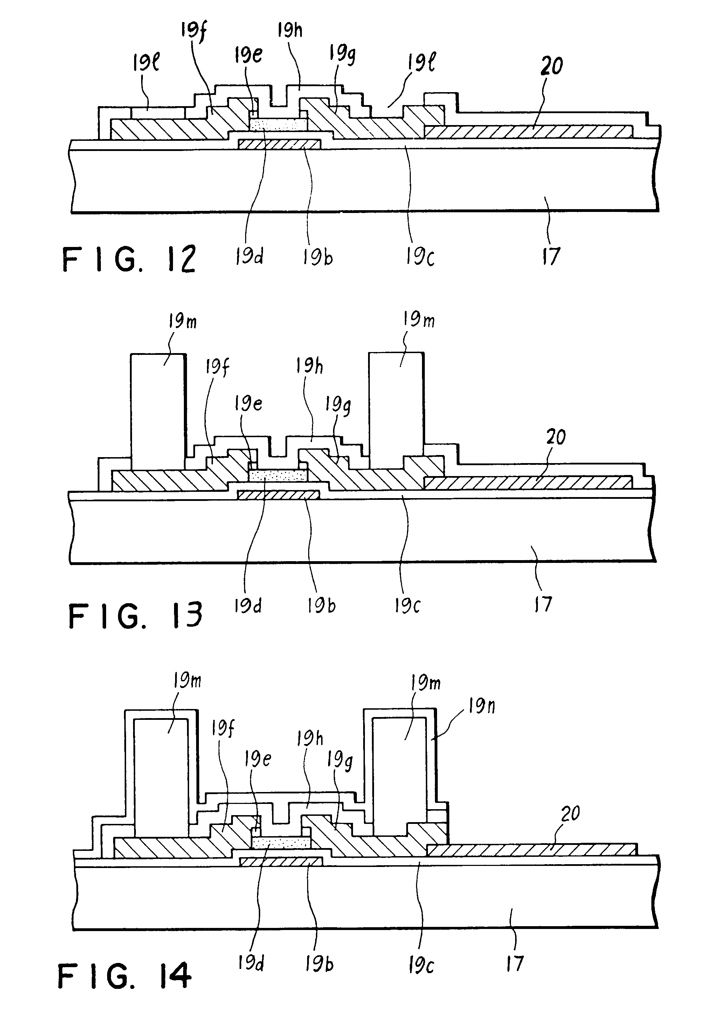

Figs. 12 to 14 illustrate a sequence of steps for producing a TFT substrate including spacers suitable for a liquid crystal colour display device.

At first, on a first glass substrate 17, chromium was deposited to a thickness of 1000 Å by evaporation and was patterned to form a gate electrode 19b as shown in Fig. 12. Then a silicon oxide film of a thickness of 1000 Å was deposited by sputtering to form a gate insulation film 19c. Then a pixel display electrode 20 was formed, and amorphous silicon as a semiconductor layer 19d of a thickness of 1000 Å and amorphous silicon containing phosphorus with a concentration of 1 x 10²⁰ atom/cm³ as a low-resistance semiconductor layer 19e were deposited and patterned to leave an island on the gate electrode 19b. Subsequently aluminium was deposited to a thickness of 5000 Å as a drain electrode contact 19f and a source electrode contact 19g, then a silicon nitride film was deposited as an inorganic protective film 19h, and apertures 19l were formed on said drain electrode contact 19f and source electrode contact 19g. The apertures 19l are sized 1-4 µm in lateral length, and may be positioned not only on the drain and source electrode contacts but also on the wirings therefor.

Then, as shown in Fig. 13, aluminium spacers 19m were deposited with a thickness of 3.0 µm selectively on the apertures 19l, by a CVD process utilising DMAH (dimethylaluminium hydride). The thickness of said aluminium spacers 19m is within a range of 1 to 15 µm, preferably 1 to 10 µm.

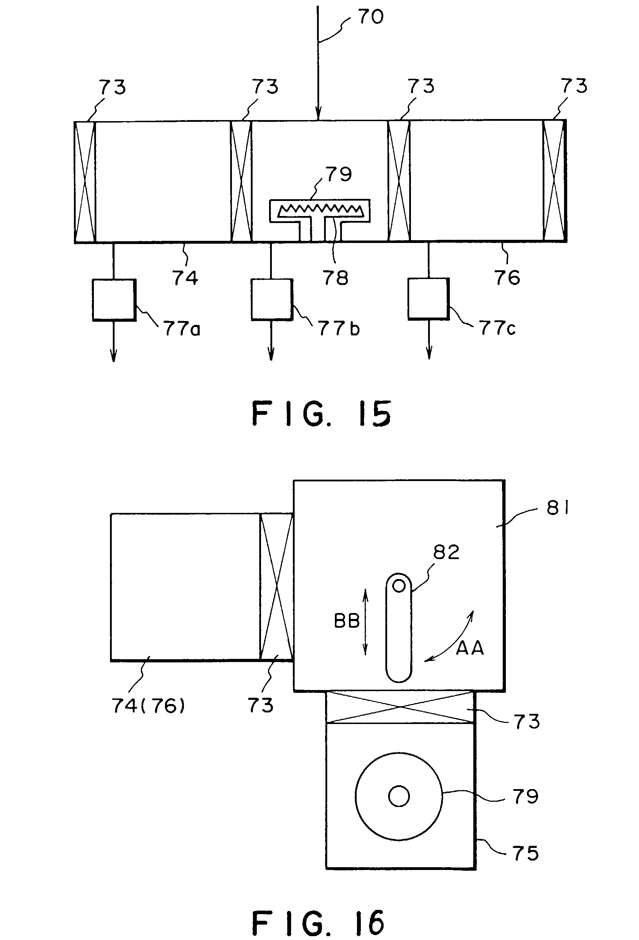

The selective CVD process of aluminium or a metal principally composed of aluminium, which enables satisfactory exploitation of the present invention, will be explained with reference to Figs. 15 to 17.

As shown in Fig. 15, a continuous metal film forming apparatus, for forming an aluminium film or a metal film principally composed of aluminium, is composed of a loading chamber 74, a CVD reaction chamber (first film forming chamber) 75, and an unloading chamber 76 which can be sealed from the external atmosphere and can be mutually communicated by gate valves 73 and can be evacuated or reduced in pressure respectively by vacuum systems 77a - 77c.

The loading chamber 74 is provided for replacing the atmosphere of the substrate before the deposition with hydrogen, in order to improve the throughput.

The next CVD reaction chamber 75, for effecting selective deposition on the substrate under a normal or reduced pressure, is provided therein with a substrate holder 79 with a resistance heater 78 for heating to 200° - 430°C and is further provided with a gas line 80 for introducing gaseous components into said chamber.

The final unloading chamber 76 is provided for replacing the atmosphere with nitrogen, as a final adjustment before the substrate after the metal film deposition is taken out to the exterior.

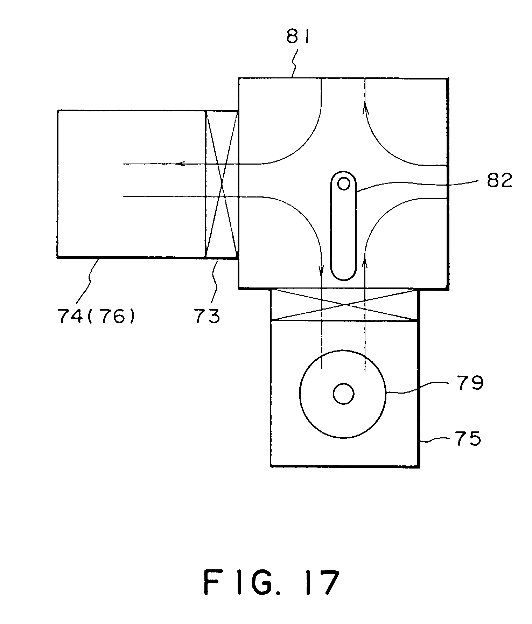

The above-explained continuous metal film forming apparatus is constructed in practice, with a structure shown in Fig. 16 in which the loading chamber 74, CVD reaction chamber 75 and unloading chamber 76 are mutually connected through a transport chamber 81. In this structure the loading chamber 74 serves also as the unloading chamber 76. In said transport chamber 74 there is provided an arm (transport means) 82 which is rotatable in both directions as indicated by an arrow A-A and extendable and retractable in directions B-B. Said arm 82 can move the glass substrate from the loading chamber 74 to the CVD reaction chamber 75, then to the unloading chamber 76 according to the process in succession and without exposure to the external atmosphere, as indicated by arrows in Fig. 17.

The aluminium film formation on the first glass substrate 17 is conducted in the following manner.

At first the first glass substrate 17 is placed in the loading chamber 74, of which atmosphere is replaced by hydrogen. Then the interior of the reaction chamber 75 is evacuated by the vacuum system 77b approximately 1 x 10⁻⁸ Torr.

However the aluminium film formation is possible even if the pressure in the reaction chamber 75 is higher than 1 x 10⁻⁸ Torr.

Then dimethylaluminium hydride (DMAH) is supplied from a gas line (not shown), with hydrogen as carrier gas. As alkylaluminium hydride, monomethylaluminium hydride (Aℓ(CH₃)H₂; MMAH) may be utilised instead of DMAH.

Also hydrogen is introduced from a second gas line (not shown), and the aperture of a slow leak valve (not shown) is adjusted to maintain the reaction chamber 75 at a predetermined pressure. The typical total pressure is about 1.5 Torr, with a DMAH partial pressure of about 5.0 x 10⁻³ Torr. Subsequently the resistance heater 78 of the substrate holder 79 is energised to directly heat the substrate, whereby aluminium is deposited solely on the electron-donating surface of the substrate, i.e. exposed surface of the wiring conductors. The obtained deposited film has satisfactory flatness and durability, and can therefore serve as an extremely excellent spacer.

The surface temperature of the first glass substrate was maintained at 270°C by direct heating.

After said aluminium deposition, the CVD reaction chamber 75 is evacuated, by the vacuum system 77b, to a pressure of 5 x 10⁻³ Torr or lower.

Under the above-mentioned depositing conditions, aluminium was deposited with a speed of 3000 Å/min. selectively on the drain electrode contact/wiring 19f and the source electrode contact/wiring 19g on the first glass substrate 17, and the deposition was conducted for 13 minutes.

Then, after the loading chamber 74 (76) is evacuated to 5 x 10⁻³ Torr or lower, the gate valve 73 is opened and said substrate 17 is transferred. After said gate valve 73 is closed, nitrogen gas is introduced to the atmospheric pressure in the loading chamber 74 (76), and the substrate is taken out from the apparatus through the gate valve 73.

Then, as shown in Fig. 14, a silicon nitride film of a thickness of 3000 Å was deposited as an inorganic protective film 19n, and parts of the inorganic protective films 19e, 19n on the pixel display electrode 65 were removed.

Subsequently a polyimide film was coated and cured and a light shield member was formed above the semiconductor layer 19d, across said polyimide film. Furthermore there were formed an organic protective film and a liquid crystal orienting film, completing the structure of the TFT substrate.

In the foregoing description, the thin film transistor is obtained by forming the gate electrode 19b, gate insulation film 19c and semiconductor layer 19d in succession on the first glass substrate 17, but it may also be obtained by forming the semiconductor layer 19d, gate insulation film 19c and gate electrode 19b in this order on the substrate 17. Also the semiconductor layer 19d may be composed of polycrystalline silicon instead of amorphous silicon.

Furthermore, the thin film device 19 may be composed of a MIM (metal-insulator-metal) diode instead of the thin film transistor.

Furthermore, the drain electrode contact 19f and the source electrode contact 19g may be composed, instead of aluminium, of an aluminium alloy such as aluminium-silicon (Aℓ-Si), aluminium-titanium (Aℓ-Ti) or aluminium-silicon-copper (Aℓ-Si-Cu); a high-melting metal such as titanium (Ti), tungsten (W) or molybdenum (Mo); a silicide such as titanium silicide (TiSi), tungsten silicide (WSi) or molybdenum silicide (MoSi); or amorphous, polycrystalline or monocrystalline silicon containing an N-type impurity such as phosphorus or arsenic or a P-type impurity such as boron.

Furthermore, the aluminium layer spacers 19m may be replaced by a metal principally composed of aluminium, such as aluminium-silicon, to be deposited by means of DMAH, silicon-containing gas and hydrogen.

## Claims

1. A liquid crystal colour display device comprising:
a first and a second substrate (17,11) arranged substantially parallel and mutually opposed;
a liquid crystal material (18) sandwiched between said first and second substrates (17,11);
a plurality of transparent display electrodes (120) and corresponding thin film switching devices (19) disposed on the inward facing surface of said first substrate (17) each thin film switching device (19) connected to its corresponding display electrode (20);
a first transparent counter electrode (12); and
a composite layer (13a, 13b, 13c, 14) of colour filters (13a, 13b, 13c) and light shield members (14), wherein said light shield members (14) being composed of aluminium or a metal substantially composed of aluminium and being disposed in areas of said composite layer (13a, 13b, 13c, 14) where said colour filters (13a,13b,13c) are absent
characterised in that:
said first transparent counter electrode (12) is disposed on the inward facing surface of said second substrate (11) and said composite layer (13a, 13b, 13c, 14) is disposed on said first transparent counter electrode (12), and in that
a second transparent counter electrode (16) is disposed on said composite layer (13a, 13b,13c, 14).

2. A display device as claimed in claim 1 wherein said colour filters (13a, 13b, 13c) and said light shield members (14) are of substantially the same layer thickness.

3. A display device as claimed in claim 1 or 2 further characterised by:
a patterned insulation film (19h) having openings over said transparent display electrodes (20) and over wiring conductors (19f,19g)) of said thin film switching devices (19); and
spacers (19m) composed of aluminium or a metal composed principally of aluminium, disposed on the parts of said wiring conductors (19f,19g) exposed by said openings of said patterned insulation film (19h).

4. A method of producing the liquid crystal colour display device of any one of claims 1 to 3, which method includes:
providing a first substrate (17) having on a principal surface thereof a plurality of transparent display electrodes (20) and corresponding thin film switching devices (19) connected thereto;
preparing a second substrate (11) having on a principal surface thereof both a first transparent counter electrode (12) and a composite layer (13a,13b,13c,14) of colour filters (13a,13b,13c) and light shield members (14) composed of aluminium or a metal substantially composed of aluminium;
arranging said first and second substrates (17,11) in parallel with said respective principal surfaces mutually opposed and facing inwards; and
introducing liquid crystal material (18) into the gap between said first and second substrates (17,11) so that it is sandwiched therebetween;
which method is characterised in that said second substrate (11) is prepared by:
depositing a transparent film of conductive material on the principal surface of said second substrate (11) to form said first transparent counter electrode (12);
forming said colour filters (13a, 13b, 13c) of said composite layer (13a, 13b, 13c, 14);
forming said light shield member (14) of said composite layer (13a, 13b, 13c, 14) by depositing aluminium, or a metal principally composed of aluminium, selectively upon areas of said first transparent counter electrode (12) left exposed after said forming of said colour filters (13a, 13b, 13c), by chemical vapour deposition from a first gaseous mixture comprising an alkylaluminium hydride gas and hydrogen gas; and
depositing a transparent film of conductive material on the surface of said composite layer (13A, 13B, 13C, 14) to form a second transparent counter electrode (16).

5. A method as claimed in claim 4 wherein the selective deposition of aluminium is controlled to produce said light shield member (14) to a layer thickness substantially the same as that of said colour filters (13a, 13b, 13c).

6. A method as claimed in either preceding claim 4 or 5, which method is further characterised by:
depositing insulation film (19h) over said plurality of transparent display electrodes (20) and corresponding thin film switching devices (19);
defining openings in said insulation film (19h) to expose wiring conductors (19f,19g) of said thin film switching devices (19);
depositing aluminium, or a metal composed principally of aluminium, selectively on said exposed wiring conductors (19f,19g) by using chemical vapour deposition from a second gaseous mixture comprising an alkylaluminium hydride gas and hydrogen gas, to form spacers (19m); and
defining openings in said insulation film (19h) over said transparent display electrodes (20).

7. A method as claimed in claim 6 wherein the alkylaluminium hydride gas of said second gaseous mixture is dimethyl aluminium hydride.

8. A method as claimed in any of claims 4 to 7 wherein the alkylaluminium hydride gas of said first gaseous mixture is dimethyl aluminium hydride.

## Patentansprüche

1. Flüssigkristall-Farbanzeigevorrichtung, umfassend:
ein erstes und ein zweites Substrat (17, 11), die im wesentlichen parallel und einander gegenüberliegend angeordnet sind;
ein Flüssigkristallmaterial (18), das sandwichartig zwischen dem ersten und zweiten Substrat (17, 11) eingeschlossen ist;
eine Vielzahl von transparenten Anzeigeelektroden (20) und entsprechende Dünnfilm-Schaltvorrichtungen (19), die auf der nach innen gerichteten Oberfläche des ersten Substrats (17) angeordnet sind, wobei jede Dünnfilm-Schaltvorrichtung (19) mit ihrer entsprechenden Anzeigeelektrode (20) verbunden ist;
eine erste transparente Gegenelektrode (12); und
eine Verbundstoffschicht (13a, 13b, 13c, 14) aus Farbfiltern (13a, 13b, 13c) und Lichtabschirmelementen (14), wobei die Lichtabschirmelemente (14) aus Aluminium oder einem hauptsächlich aus Aluminium zusammengesetzten Metall zusammengesetzt sind und in Bereichen der Verbundstoffschicht (13a, 13b, 13c, 14) angeordnet sind, in denen die Farbfilter (13a, 13b, 13c) nicht vorhanden sind,
**dadurch gekennzeichnet, daß**
die erste transparente Gegenelektrode (12) auf der nach innen gerichteten Oberfläche des zweiten Substrats (11) angeordnet ist und die Verbundstoffschicht (13a, 13b, 13c, 14) auf der ersten transparenten Gegenelektrode (12) angeordnet ist, und daß
eine zweite transparente Gegenelektrode (16) auf der Verbundstoffschicht (13a, 13b, 13c, 14) angeordnet ist.

2. Anzeigevorrichtung nach Anspruch 1, wobei die Farbfilter (13a, 13b, 13c) und die Lichtabschirmelemente (14) im wesentlichen dieselbe Schichtdicke haben.

3. Anzeigevorrichtung nach Anspruch 1 oder Anspruch 2, ferner gekennzeichnet durch:
einen strukturierten Isolierfilm (19h) mit Öffnungen über den transparenten Anzeigeelektroden (20) und über den Verdrahtungsleitungen (19f, 19g) der Dünnfilm-Schaltvorrichtungen (19); und
Abstandshalter (19m), die aus Aluminium oder einem hauptsächlich aus Aluminium zusammengesetzten Metall zusammengesetzt sind, die auf den Teilen der Verdrahtungsleitungen (19f, 19g) angeordnet sind, die durch die Öffnungen des strukturierten Isolierfilms (19h) freigelegt sind.

4. Verfahren zur Herstellung der Flüssigkristall-Farbanzeigevorrichtung nach einem der Ansprüche 1 bis 3, wobei das Verfahren die folgenden Schritte umfaßt:
Bereitstellen eines ersten Substrats (17) mit einer Vielzahl von transparenten Anzeigeelektroden (20) und entsprechenden, mit diesen verbundenen Dünnfilm-Schaltvorrichtungen (19) auf einer Hauptoberfläche des ersten Substrats;
Vorbereiten eines zweiten Substrats (11) mit sowohl einer ersten transparenten Gegenelektrode (12) als auch einer Verbundstoffschicht (13a, 13b, 13c, 14) aus Farbfiltern (13a, 13b, 13c) und Lichtabschirmelementen (14), die aus Aluminium oder einem hauptsächlich aus Aluminium zusammengesetzten Metall zusammengesetzt sind, auf einer Hauptoberfläche des zweiten Substrats;
paralleles Anordnen des ersten und zweiten Substrats (17, 11), wobei die jeweiligen Hauptoberflächen einander gegenüberliegen und nach innen gerichtet sind; und
Einbringen von Flüssigkristallmaterial (18) in den Zwischenraum zwischen dem ersten und zweiten Substrat (17, 11), so daß es zwischen ihnen sandwichartig eingeschlossen ist;
wobei das Verfahren **dadurch gekennzeichnet ist, daß** das zweite Substrat (11) durch die folgenden Schritte hergestellt wird:
Abscheiden eines transparenten Films aus leitendem Material auf die Hauptoberfläche des zweiten Substrats (11) unter Bildung der ersten transparenten Gegenelektrode (12);
Bilden der Farbfilter (13a, 13b, 13c) der Verbundstoffschicht (13a, 13b, 13c, 14);
Bilden des Lichtabschirmelements (14) der Verbundstoffschicht (13a, 13b, 13c, 14) durch Abscheiden von Aluminium oder einem hauptsächlich aus Aluminium zusammengesetzten Metall selektiv auf den Bereichen der ersten transparenten Gegenelektrode (12), die nach der Bildung der Farbfilter (13a, 13b, 13c) freigelegt geblieben sind, durch chemisches Aufdampfen aus einer ersten Gasmischung, die ein Alkylaluminiumhydridgas und Wasserstoffgas umfaßt; und
Abscheiden eines transparenten Films aus leitendem Material auf der Oberfläche der Verbundstoffschicht (13a, 13b, 13c, 14) unter Bildung einer zweiten transparenten Gegenelektrode (16).

5. Verfahren nach Anspruch 4, wobei die selektive Abscheidung von Aluminium gesteuert wird, um das Lichtabschirmelement (14) bis zu einer Schichtdicke zu erzeugen, die im wesentlichen diselbe wie die der Farbfilter (13a, 13b, 13c) ist.

6. Verfahren nach Anspruch 4 oder 5, wobei das Verfahren ferner gekennzeichnet ist durch:
die Abscheidung eines Isolierfilms (19h) über der Vielzahl von transparenten Anzeigeelektroden (20) und den entsprechenden Dünnfilm-Schaltvorrichtungen (19);
das Definieren von Öffnungen in dem Isolierfilm (19h), wobei Verdrahtungsleitungen (19f, 19g) der Dünnfilm-Schaltvorrichtungen (19) freigelegt werden;
die Abscheidung von Aluminium oder einem hauptsächlich aus Aluminium zusammengesetzten Metall selektiv auf den freigelegten Verdrahtungsleitungen (19f, 19g) durch Verwendung von chemischem Aufdampfen aus einer zweiten Gasmischung, die ein Alkylaluminiumhydridgas und Wasserstoffgas umfaßt, unter Bildung von Abstandshaltern (19m); und
das Definieren von Öffnungen in dem Isolierfilm (19h) über den transparenten Anzeigeelektroden (20).

7. Verfahren nach Anspruch 6, wobei das Alkylaluminiumhydridgas der zweiten Gasmischung Dimethylaluminiumhydrid ist.

8. Verfahren nach einem der Ansprüche 4 bis 7, wobei das Alkylaluminiumhydridgas der ersten Gasmischung Dimethylaluminiumhydrid ist.

## Revendications

1. Dispositif d'affichage en couleur à cristaux liquides, comprenant:
des premier et second substrats (17, 11) disposés de façon sensiblement parallèle et mutuellement opposés;
un matériau (18) à cristaux liquides pris en sandwich entre lesdits premier et second substrats (17, 11);
un ensemble d'électrodes (120) d'affichage transparentes et de dispositifs (19) de commutation à couche mince correspondants disposés sur la surface tournée vers l'intérieur dudit premier substrat (17), chaque dispositif (19) de commutation à couche mince étant connecté à son électrode (20) d'affichage correspondante;
une première contre-électrode (12) transparente; et
une couche (13a, 13b, 13c, 14) composite de filtres (13a, 13b, 13c) colorés et d'éléments (14) opaques à la lumière, dans lequel lesdits éléments (14) opaques à la lumière sont composés d'aluminium ou d'un métal sensiblement composé d'aluminium et sont disposés dans des zones de ladite couche (13a, 13b, 13c, 14) composite dans lesquelles lesdits filtres (13a, 13b, 13c) colorés sont absents,
caractérisé en ce que:
ladite première contre-électrode (12) transparente est disposée sur la surface tournée vers l'intérieur dudit second substrat (11) et ladite couche (13a, 13b, 13c, 14) composite est disposée sur ladite première contre-électrode (12) transparente, et en ce que
une seconde contre-électrode (16) transparente est disposée sur ladite couche (13a, 13b, 13c, 14) composite.

2. Dispositif d'affichage selon la revendication 1, dans lequel lesdits filtres (13a, 13b, 13c) colorés et lesdits éléments (14) opaques à la lumière ont sensiblement la même épaisseur de couche.

3. Dispositif d'affichage selon la revendication 1 ou 2, caractérisé en outre par:
un film (19h) d'isolation muni d'un motif ayant des ouvertures au-dessus desdites électrodes (20) d'affichage transparentes et au-dessus de conducteurs (19f, 19g) de câblage desdits dispositifs (19) de commutation à couche mince; et
des éléments (19m) d'espacement composés d'aluminium ou d'un métal principalement composé d'aluminium, disposés sur les parties desdits conducteurs (19f, 19g) de câblage qui sont exposées par lesdites ouvertures dudit film (19h) d'isolation à motif.

4. Procédé de production du dispositif d'affichage en couleur à cristaux liquides selon l'une quelconque des revendications 1 à 3, lequel procédé comprend:
l'utilisation d'un premier substrat (17) ayant sur une surface principale de celui-ci un ensemble d'électrodes (20) d'affichage transparentes et de dispositifs (19) de commutation à couche mince correspondants qui leur sont connectés;
la préparation d'un second substrat (11) ayant, sur une surface principale de celui-ci, à la fois une première contre-électrode (12) transparente et une couche (13a, 13b, 13c, 14) composite de filtres (13a, 13b, 13c) colorés et des éléments (14) opaques à la lumière composés d'aluminium ou d'un métal sensiblement composé d'aluminium;
l'agencement desdits premier et second substrats (17, 11) parallèlement auxdites surfaces principales respectives mutuellement opposées et tournées vers l'intérieur; et
l'introduction d'un matériau (18) à cristaux liquides dans l'interstice séparant lesdits premier et second substrats (17, 11) de façon qu'ils soient pris en sandwich entre ceux-ci;
lequel procédé est caractérisé en ce que ledit second substrat (11) est préparé par:
dépôt d'un film transparent de matériau conducteur sur la surface principale dudit second substrat (11) pour former ladite première contre-électrode (12) transparente;
formation desdits filtres (13a, 13b, 13c) colorés de ladite couche (13a, 13b, 13c, 14) composite;
formation dudit élément (14) opaque à la lumière de ladite couche (13a, 13b, 13c, 14) composite par dépôt d'aluminium, ou d'un métal principalement composé d'aluminium, de façon sélective sur des zones de ladite première contre-électrode (12) transparente qui sont laissées exposées après ladite formation desdits filtres (13a, 13b, 13c) colorés, par dépôt chimique en phase vapeur à partir d'un premier mélange gazeux comprenant un gaz constitué d'hydrure d'alkylaluminium et d'hydrogène gazeux; et
dépôt d'un film transparent en matériau conducteur sur la surface de ladite couche (13a, 13b, 13c, 14) composite pour former une seconde contre-électrode (16) transparente.

5. Procédé selon la revendication 4, dans lequel le dépôt sélectif d'aluminium est commandé de façon à produire ledit élément (14) opaque à la lumière jusqu'à obtention d'une épaisseur de couche sensiblement identique à celle desdits filtres (13a, 13b, 13c) colorés.

6. Procédé selon l'une quelconque des revendications 4 et 5 précédentes, lequel procédé est en outre caractérisé par:
le dépôt d'un film (19h) d'isolation sur ledit ensemble d'électrodes (20) d'affichage transparentes et de dispositifs (19) de commutation à couche mince correspondants;
la définition d'ouvertures dans ledit film (19h) d'isolation pour exposer des conducteurs (19f, 19g) de câblage desdits dispositifs (19) de commutation à couche mince;
le dépôt d'aluminium ou d'un métal principalement composé d'aluminium, de façon sélective sur lesdits conducteurs (19f, 19g) de câblage exposés par utilisation d'un dépôt chimique en phase vapeur à partir d'un second mélange gazeux comprenant un hydrure d'alkylaluminium gazeux et de l'hydrogène gazeux, afin de former des éléments (19m) d'espacement; et
la définition d'ouvertures dans ledit film (19h) d'isolation au-dessus desdites électrodes (20) d'affichage transparentes.

7. Procédé selon la revendication 6, dans lequel l'hydrure d'alkylaluminium gazeux dudit second mélange gazeux est l'hydrure de diméthyl aluminium.

8. Procédé selon l'une quelconque des revendications 4 à 7, dans lequel l'hydrure d'alkylaluminium gazeux dudit premier mélange gazeux est l'hydrure de diméthyl aluminium.
